# FASCICULE DE BREVET EUROPEEN

(11) **EP 2 383 497 B1**
(45) Date de publication et mention de la délivrance du brevet: **30.09.2015**
(21) Numéro de dépôt: 11163769.0
(22) Date de dépôt: 26.04.2011
(51) Int. Cl.: F16L 3/10

(54) **Dispositif de fixation réglable notamment pour tuyauterie**
Adjustable attachment device, in particular for pipes
Verstellbare Befestigungsvorrichtung, insbesondere für Rohrsystem

(30) Priorité: 28.04.2010 FR 1001813
(43) Date de publication de la demande: 02.11.2011
(73) Titulaire: Cita Production (SAS), 21760 Lamarche sur Comté (FR)
(72) Inventeur: Favot, Pierre, 54600, Villers Les Nancy (FR); Piot, Jean-Claude, 21760, Lamarche sur Saone (FR)
(74) Mandataire: Oudin, Stéphane

(56) Documents cités:
- WO-A1-83/02655
- WO-A1-97/37164
- US-A- 2 937 835
- US-A- 5 931 423

## Description

### Domaine technique

La présente invention concerne un dispositif de fixation réglable notamment pour tuyauterie, destiné en particulier à la fixation de tuyauteries dans des installations sensibles, par exemple des installations industrielles telles que des centrales nucléaires.

### Technique antérieure

Les colliers pour tuyauterie sont largement et fréquemment utilisés, notamment dans les industries, principalement pour fixer des tuyauteries à des parois. Ces colliers pour tuyauterie sont souvent utilisés dans des zones encombrées. Il existe une multitude de types de colliers, par exemple des colliers à mâchoires dont les mâchoires sont resserrées l'une vers l'autre par un ou plusieurs éléments de serrage pour assurer la fixation de la tuyauterie.

Un collier à mâchoires simple (avec un seul élément de serrage) comporte par exemple :
- une plaque destinée à être solidarisée soit par soudure soit par vis à un support, cette plaque étant par ailleurs couplée par soudure à un insert pourvu d'un taraudage apte à recevoir par vissage un élément de serrage,
- une tige de maintien faisant office d'élément de serrage et dont les extrémités sont filetées, une extrémité étant vissée dans l'insert, l'autre extrémité étant pourvue d'un écrou,
- des mâchoires (en plastique, aluminium ou acier) pourvues chacune d'un logement, les logements formant ensemble une zone circulaire apte à recevoir la tuyauterie, chaque mâchoire étant traversée par un alésage autorisant le passage de la tige de maintien.

Les mâchoires sont rapprochées l'une vers l'autre par le serrage de l'écrou, vissé sur l'extrémité libre de la tige de maintien, jusqu'à obtention du blocage des mâchoires l'une contre l'autre. L'élément de serrage peut n'être qu'une vis remplaçant la tige de maintien et l'écrou. Elle est alors utilisée de manière similaire à celle de la tige de maintien pour bloquer les mâchoires l'une contre l'autre.

Des exemples de colliers similaires sont décrits par les publications DE 81 07 306, DE 90 03 030 et DE 19 739 824. Afin de pouvoir être utilisés dans des installations sensibles, ces colliers doivent répondre à la norme DIN3015. Par ailleurs, pour permettre la dilatation longitudinale de la tuyauterie, les colliers peuvent être utilisés selon deux configurations distinctes :
- une configuration glissante pour laquelle on utilise un collier dont l'alésage a un diamètre supérieur à celui de la tuyauterie,
- une configuration bloquante pour laquelle on utilise un collier dont l'alésage a un diamètre égal, voir légèrement inférieur, au diamètre extérieur de la tuyauterie.

Cependant, ces colliers imposent l'utilisation de soudure pour fixer certains des éléments entre eux. Or, qu'ils permettent d'assurer le guidage ou le blocage d'une tuyauterie, ces colliers doivent répondre aux exigences fixées par les codes de construction, à savoir en particulier, être accessibles pour d'éventuels contrôles après leur installation en milieu industriel de production et pendant l'exploitation. Pour compenser les défauts de positionnement ou d'alignement de la tuyauterie liés aux tolérances de construction des bâtiments (génie civil), défauts fréquemment rencontrés, une autre configuration consiste à adapter la position du collier à celle de la tuyauterie.

Le document WO 97/37164 Al divulgue un dispositif de fixation réglable selon le préambule de la revendication 1.

### Exposé de l'invention

La présente invention vise à remédier à ces inconvénients en proposant, un dispositif de fixation réglable, notamment pour tuyauterie, d'encombrement limité, solide, apte à assurer simultanément le guidage ou le blocage efficaces d'une tuyauterie, sans causer de déformation de la tuyauterie si l'alignement ou le positionnement de cette tuyauterie est imprécis, tout en s'affranchissant de la nécessité d'utiliser des soudures.

L'invention est un dispositif de fixation réglable selon la revendication 1.

Ainsi, le dispositif de fixation réglable selon l'invention permet de guider ou de bloquer efficacement une tuyauterie, les première et seconde mâchoires pouvant s'orienter et se positionner pour mieux s'adapter à la configuration particulière de chaque tuyauterie. Le dispositif de fixation réglable selon l'invention autorise l'engagement latéral des tiges de maintien dans les première et seconde mâchoires. Il est ainsi possible d'installer le dispositif de fixation réglable autour d'une tuyauterie dans un environnement encombré et un espace restreint. En effet, l'engagement des tiges de maintien dans les orifices de mâchoire peut être au moins en partie transversal ou latéral.

L'axe transversal du logement peut, selon les besoins, être prévu légèrement incliné par rapport au plan de base.

Lesdites rainures sont de préférence orientées latéralement pour permettre un engagement au moins en partie latéral des tiges de maintien dans les orifices de mâchoire.

Le dispositif de fixation réglable selon l'invention permet d'encaisser les défauts d'alignement et d'orientation latéraux, dans un plan horizontal, de la tuyauterie sans pour autant la déformer.

Le dispositif de fixation réglable selon l'invention permet d'encaisser les défauts d'alignement et d'orientation latéraux, dans le plan de base, de la tuyauterie sans pour autant la déformer.

Les première et seconde mâchoires comportent avantageusement chacune au moins deux orifices de mâchoires définissant chacun une rainure ouverte.

De manière préférée, ladite plaque de base comporte des orifices de plaque taraudés, lesdites tiges de maintien comportent chacune une première extrémité filetée et ladite plaque de base est couplée auxdites tiges de maintien par le vissage desdites premières extrémités filetées dans lesdits orifices de plaque taraudés sans avoir recours à une soudure. Le dispositif de fixation réglable selon l'invention est ainsi exempt de soudure cachée, difficile à contrôler hors atelier. Il peut être, au moins en partie, facilement assemblé sur le lieu d'installation de la tuyauterie.

Lesdites tiges de maintien peuvent comporter chacune une seconde extrémité filetée apte à recevoir au moins un écrou en appui sur ladite première mâchoire à l'opposé de ladite plaque de base. Le serrage des première et seconde mâchoires est ainsi facilement obtenu.

Lesdits écrous peuvent être en appui contre ladite première mâchoire par l'intermédiaire d'une plaque d'appui comportant deux orifices d'appui traversants prévus en regard des tiges de maintien. Cette plaque d'appui permet de consolider l'assemblage et de répartir les efforts de serrage des écrous sur toute la largeur des première et seconde mâchoires.

Le dispositif de fixation réglable peut également comporter au moins une cale apte à être interposée entre lesdites première et seconde mâchoires ou entre l'une desdites plaque de base, plaque d'appui et l'une desdites première mâchoire et seconde mâchoire. Cette cale permet d'ajuster l'axe du logement recevant la tuyauterie par rapport au plan de base.

### Description sommaire des dessins

D'autres avantages et caractéristiques ressortiront mieux de la description qui va suivre d'une variante d'exécution d'un dispositif de fixation réglable pour tuyauterie selon l'invention en référence aux figures annexées sur lesquelles :
- Les figures 1A et 1B sont respectivement des vues en élévation et de côté du dispositif de fixation réglable selon l'invention ;
- Les figures 1C et 1D sont respectivement des vues de dessous et de dessus, représentées sans les écrous, du dispositif de fixation réglable des figures 1A et 1B ;
- Les figures 3 et 4 sont des vues en élévation du dispositif de fixation réglable des figures précédentes, le dispositif de fixation réglable étant représenté selon deux configurations de calage différentes ;
- Les figures 5 et 6 sont des vues similaires à la figure 1D du dispositif de fixation réglable selon l'invention représenté dans deux configurations d'orientation différentes.

Pour les besoins de la présente demande, on utilise en particulier les termes "horizontal" et "vertical" pour décrire la position relative des éléments les uns par rapport aux autres. Ces termes ne sont bien entendu pas limitatifs. En effet, il est bien entendu que le dispositif de fixation réglable peut être orienté différemment dans l'espace, l'"horizontale" devenant "verticale" et réciproquement.

### Meilleure manière de réaliser l'invention

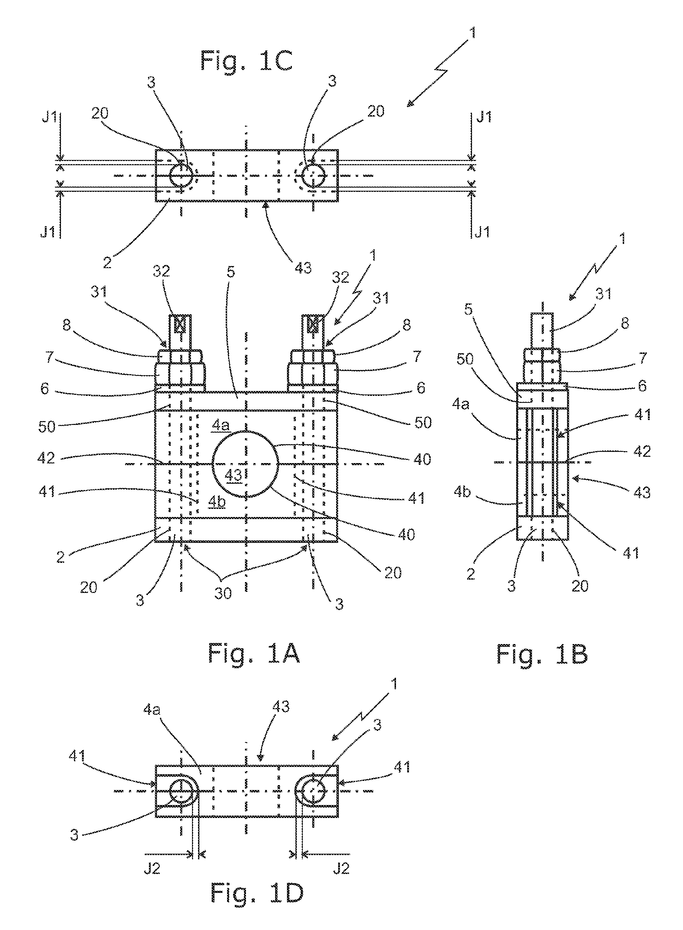

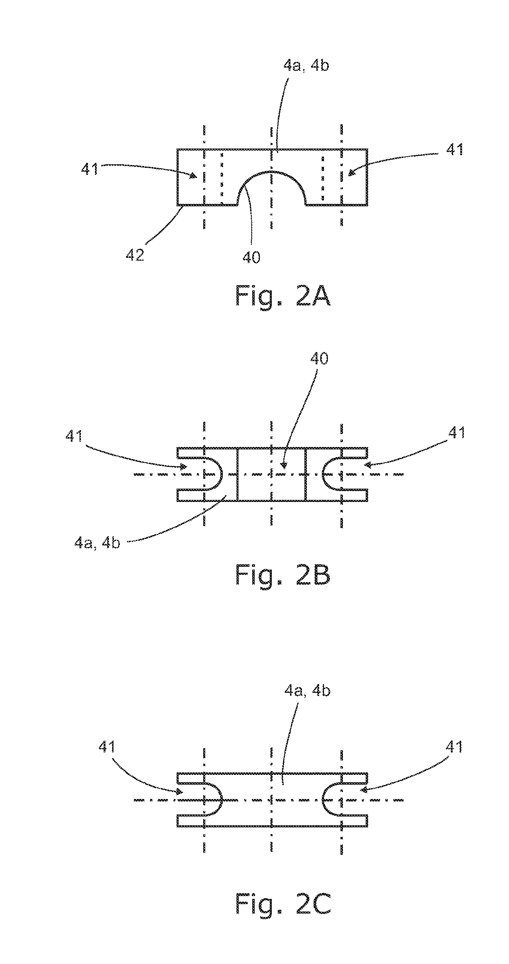

En référence aux figures 1A-1D et 2A-2C, le dispositif de fixation réglable 1 pour tuyauterie selon l'invention comporte une plaque de base 2, deux tiges de maintien 3, des première et seconde mâchoires 4a, 4b, une plaque d'appui 5, des rondelles 6, des écrous 7 et des contre-écrous 8.

La plaque de base 2 se présente sous la forme d'un parallélépipède rectangle s'étendant latéralement, sensiblement horizontalement, et définissant un plan de base destiné à être fixé à un support. Dans cet exemple, le plan de base est donc sensiblement horizontal. La plaque de base 2 a une épaisseur par exemple d'environ 6 mm, une longueur d'environ 47 mm et une largeur d'environ 20 mm. Elle comporte, de part et d'autre de son plan médian, deux orifices de plaque 20 taraudés, d'axes sensiblement verticaux et traversant la plaque de base 2. Ces orifices de plaque 20 ont par exemple un diamètre d'environ 6 mm et un taraudage M6. La plaque de base 2 est par exemple réalisée en acier non allié, par exemple en S235JR.

Selon une variante de réalisation non représentée, la plaque de base ne se présente pas sous la forme d'un parallélépipède mais par exemple sous celle d'un trapèze. De même, le support peut être horizontal ou incliné. Le support peut également comporter une incurvation. Dans ce cas, la plaque de base comportera une incurvation complémentaire.

Les tiges de maintien 3 ont par exemple un diamètre de 6 mm et comportent chacune une première et une seconde extrémités filetées 30, 31 séparées ou non par une portion lisse. La première extrémité filetée 30 de chaque tige de maintien 3 est vissée dans un des orifices de plaque 20 de manière à ce que les tiges de maintien 3 se dressent sensiblement verticalement au-dessus de la plaque de base 2, parallèlement entre-elles. La seconde extrémité filetée 31 de chaque tige de maintien 3 est pourvue de méplats 32 prévus en regard l'un de l'autre pour faciliter la manipulation et le serrage des tiges de maintien 3, et en particulier leur vissage sur la plaque de base 2. Les tiges de maintien 3 ont par exemple un diamètre de 6 mm et des filetages M6. Elles sont de préférence réalisées en acier fortement allié. La nuance de l'acier utilisé peut bien entendu être adaptée en fonction des efforts que les tiges de maintien 3 sont destinées à encaisser. Selon une variante de réalisation non représentée le méplat peut être prévu entre les extrémités filetées. Selon une autre variante de réalisation non représentée, les tiges de maintien sont parallèles entre-elles mais inclinées par rapport à une ou plusieurs des faces de la plaque de base.

Les première et seconde mâchoires 4a, 4b se présentent sous la forme de blocs, sensiblement parallélépipédiques, comportant chacun un évidement 40 en forme de demi-cercle. Chaque bloc a par exemple une hauteur d'environ 13 mm, une longueur d'environ 44 mm et une largeur d'environ 20 mm. Les évidements 40 ont par exemple un diamètre de 16 mm. Les première et seconde mâchoires 4a, 4b sont sensiblement identiques entre-elles et destinées à être positionnées tête-bêche de manière à ce que leurs évidements 40 soient en face l'un de l'autre. Dans cette position, les première et seconde mâchoires 4a, 4b sont séparées par un plan de jonction 42, sensiblement horizontal et plan, et les évidements 40 définissent un logement transversal 43 cylindrique, d'axe transversal sensiblement horizontal et apte à recevoir une tuyauterie (non représentée). Le logement transversal 43, ainsi défini par les évidements 40, a un diamètre d'environ 16 mm apte à recevoir des tuyauteries standard. Les première et seconde mâchoires 4a, 4b sont par exemple réalisées en INOX. Pour d'autres applications, elles peuvent être réalisées en d'autres matériaux, par exemple en matériaux composites. Selon une variante de réalisation non représentée, le plan de jonction est incliné. Il peut également comporter deux pans d'inclinaisons différentes formant un V.

Les première et seconde mâchoires 4a, 4b sont chacune traversées par deux orifices de mâchoires 41, sensiblement verticaux, disposés de part et d'autre de leur plan médian. Dans une section horizontale, les orifices de mâchoires 41 ont une portion interne circulaire ayant un diamètre d'environ 8 mm. Chaque portion interne circulaire est prolongée latéralement pour former une rainure latérale, ouverte vers l'extérieur des première et seconde mâchoires 4a, 4b et s'étendant verticalement sur toute la hauteur de chaque première et seconde mâchoires 4a, 4b. Cette rainure latérale a une largeur d'environ 8 mm. Les orifices de mâchoires 41 sont emmanchés sur les tiges de maintien 3, la seconde mâchoire 4b reposant directement sur la plaque de base 2, les première et seconde mâchoires 4a, 4b encadrant la tuyauterie. Dans cet exemple, les portions internes des orifices de mâchoires 41 orientées vers l'axe des évidements 40 sont circulaires de manière à ce que les orifices de mâchoire 41 forment un U. Elles peuvent bien entendu avoir une autre forme, par exemple carrée. La forme des orifices de mâchoires peut également être évasée vers l'extérieur des mâchoires. Selon une variante de réalisation non représentée, les orifices de mâchoires débouchent transversalement. Selon encore une autre variante de réalisation non représentée, un des orifices de mâchoire débouche latéralement, l'autre transversalement. Lorsque les tiges de maintien sont prévues inclinées par rapport à la plaque de base, les orifices de mâchoires seront inclinés de la même façon.

Les dimensions des orifices de mâchoires 41 étant supérieures à celles des tiges de maintien 3, il persiste, après montage, un jeu transversal J1 et un jeu latéral J2 entre les première et seconde mâchoires 4a, 4b et les tiges de maintien 3.

Dans un plan horizontal, le jeu transversal J1 (Cf. figure 1C) est prévu entre les tiges de maintien 3 et les côtés des rainures latérales formées par les orifices de mâchoires 41 des première et seconde mâchoires 4a, 4b. Le jeu transversal J1 a par exemple une largeur d'environ 1 mm prévue de part et d'autre de chaque tige de maintien 3. Le jeu transversal J1 autorise le débattement transversal, dans un plan horizontal, d'environ 1 mm, entre les première et seconde mâchoires 4a, 4b et les tiges de maintien 3. Le jeu transversal J1 peut bien entendu avoir toute autre valeur adaptée aux défauts de positionnement et d'orientation des tuyauteries.

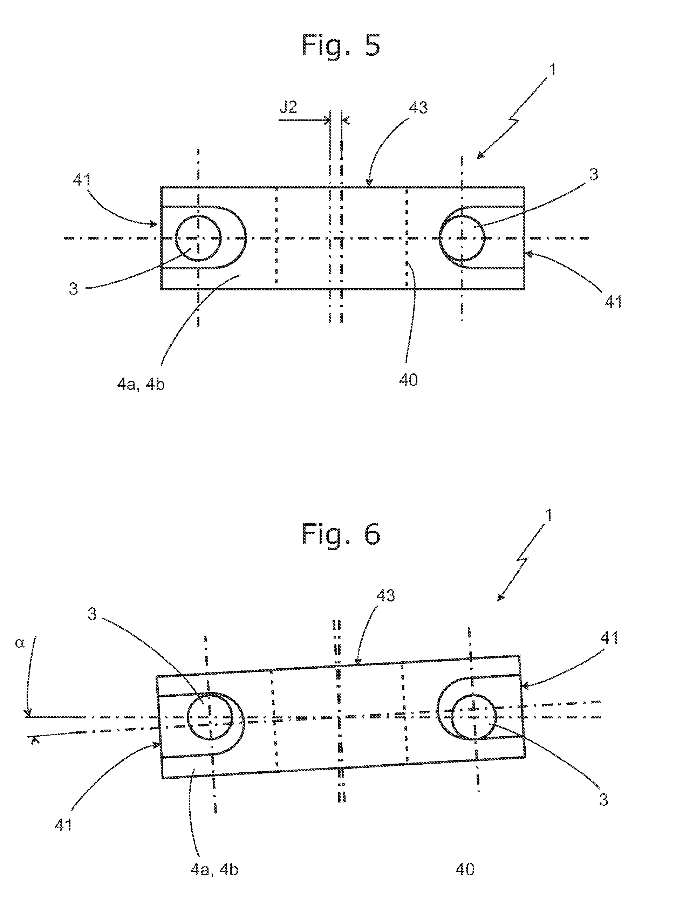

Dans un plan horizontal, le jeu latéral J2 (Cf. figure 1D) est prévu entre l'extrémité interne des orifices de mâchoires 41 et les tiges de maintien 3. Le jeu latéral J2 a par exemple une longueur d'environ 3 mm. Le jeu latéral J2 autorise le débattement latéral, dans un plan horizontal, d'environ 3 mm, entre les première et seconde mâchoires 4a, 4b et les tiges de maintien 3. Ce débattement latéral est illustré par la figure 5 qui représente la position des première et seconde mâchoires 4a, 4b par rapport aux tiges de maintien 3 après un débattement latéral vers la droite des première et seconde mâchoires 4a, 4b. Le jeu latéral J2 permet ainsi de pallier aux défauts de positionnement de la tuyauterie. Le jeu latéral J2 peut bien entendu avoir toute autre valeur adaptée aux défauts de positionnement et d'orientation des tuyauteries.

Le jeu transversal J1 et le jeu latéral J2 autorisent conjointement un pivotement horizontal, autour d'un axe vertical, d'un angle α d'au moins 4 degrés, des première et seconde mâchoires 4a, 4b par rapport aux tiges de maintien 3. Ce pivotement horizontal est illustré par la figure 6 qui représente la position des première et seconde mâchoires 4a, 4b par rapport aux tiges de maintien 3, après un pivotement horizontal dans le sens antihoraire, des première et seconde mâchoires 4a, 4b. Le pivotement horizontal peut bien entendu être observé dans le sens horaire. Le jeu transversal J1 et le jeu latéral J2 permettent de pallier aux défauts de positionnement et d'orientation de la tuyauterie.

Selon une configuration non représentée, le pivotement horizontal et le débattement latéral peuvent être combinés.

Selon une variante de réalisation non représentée, les orifices de mâchoires de la première mâchoire sont différents des orifices de mâchoires de la seconde mâchoire.

La plaque d'appui 5 est sensiblement similaire à la plaque de base 2. Elle s'en différencie principalement par les orifices d'appui 50 la traversant qui sont lisses. Elle a par ailleurs, par exemple, une épaisseur de 4 mm. La plaque d'appui 5 est disposée au-dessus de la première mâchoire 4a contre laquelle elle est serrée par l'intermédiaire de la rondelle 6, de l'écrou 7 et du contre-écrou 8 enfilés et vissés sur les tiges de maintien 3. La plaque d'appui 5 peut être réalisée en acier non allié, par exemple en S235JR. Selon une variante de réalisation non représentée, les orifices d'appui sont des trous oblongs. Selon une autre variante de réalisation non représentée, les orifices d'appui débouchent soit latéralement soit transversalement. Lorsque les orifices de mâchoires débouchent latéralement, on choisira de préférence des orifices d'appui qui débouchent transversalement de manière à ce que les rainures correspondantes ne soient pas en regard l'une de l'autre et inversement.

Les dimensions des différents éléments constituant le dispositif de fixation réglable 1 selon l'invention sont bien entendu adaptées en fonction du diamètre de la tuyauterie et des sollicitations mécaniques à supporter. On prévoira avantageusement des dispositifs de fixation 1 compatibles avec les différents diamètres nominaux de tuyauterie connus, à savoir : 6 mm, 8 mm, 10 mm, 15 mm, 20 mm, 25 mm, 32 mm, 40 mm. La réalisation en acier des éléments constituant le dispositif de fixation réglable 1 permet de conférer une solidité accrue au dispositif de fixation réglable 1 par rapport aux mêmes colliers réglables réalisés en plastique et/ou en aluminium.

Dans l'exemple illustré, les différents éléments constituant le dispositif de fixation réglable 1 selon l'invention sont symétriques par rapport à leur plan médian. Il peut bien entendu en être autrement.

Lors de la mise en place du dispositif de fixation réglable 1, la plaque de base 2 est par exemple solidarisée par soudure à un support, par exemple une structure métallique (non représentée). Cette structure métallique est par exemple une plaque destinée à formée une paroi. Cette opération de soudage est, le plus souvent, réalisée en atelier. Il est donc notamment possible de vérifier la qualité de la soudure, dans des conditions optimales, avant l'installation de la structure métallique. La structure métallique est ainsi livrée, sur son chantier d'installation, avec sa (ou ses) plaque(s) de base 2. Les autres éléments constituant le dispositif de fixation réglable 1 sont couplés ultérieurement à la plaque de base 2, par exemple lors de l'installation de la tuyauterie. Pour ce faire, on place la seconde mâchoire 4b, d'un côté de la tuyauterie à maintenir, en regard de la plaque de base 2. Ensuite, on place, en regard de la seconde mâchoire 4b, la première mâchoire 4a pour qu'elle soit positionnée de l'autre côté de la tuyauterie. On engage alors les tiges de maintien 3 au travers des orifices de mâchoires 41 des première et seconde mâchoires 4b. Cet engagement peut être frontal, en suivant l'axe des orifices de mâchoires 41 jusqu'à atteindre la plaque de base 2 dans laquelle les tiges de maintien 3 sont vissées. L'engagement peut également être latéro-frontal, notamment lorsque l'espace disponible dans l'alignement de l'axe des orifices de mâchoires 41 est trop limité pour placer les tiges de maintien 3 dans l'alignement frontal des orifices de mâchoires 41. Au cours de cet engagement latéro-frontal, dans un premier temps, on engage latéralement des tiges de maintien 3 pour les positionner dans les orifices de mâchoires 41 directement au-dessus des orifices de plaque 20 puis, dans un second temps, on déplace frontalement les tiges de maintien 3 jusqu'à atteindre la plaque de base 2 dans laquelle les tiges de maintien 3 sont vissées. Cet engagement latéro-frontal est rendu possible par les orifices de mâchoires 41 qui débouchent latéralement. Après, on emmanche la plaque d'appui 5 sur les tiges de maintien 3, au-dessus de la première mâchoire 4a, et on engage les rondelles 6, écrous 7 et contre-écrous 8 sur les tiges de maintien 3. Avant de serrer l'ensemble, on utilise le jeu transversal J1 et le jeu latéral J2 pour orienter les première et seconde mâchoires 4a, 4b par rapport à la tuyauterie, pour s'adapter aux défauts de positionnement et d'orientation de cette tuyauterie. Les écrous 7 et contre-écrous 8 sont serrés. Pendant le serrage, les première et seconde mâchoires 4a, 4b finissent de s'orienter automatiquement. La tuyauterie est ainsi maintenue solidement sans qu'elle ne soit déformée. Les tuyauteries ainsi fixées peuvent être horizontales, verticales ou inclinées indépendamment ou selon l'inclinaison du support.

Lorsque les orifices de mâchoires débouchent transversalement, l'engagement des tiges de maintien se fera frontalement ou, successivement transversalement et frontalement.

Selon une variante de réalisation non représentée, seule l'une des mâchoires comporte des orifices de mâchoires formant des rainures latérales. Selon une autre variante de réalisation non représentée, chaque mâchoire comporte deux orifices de mâchoires dont l'un seulement forme une rainure latérale, l'autre orifice de mâchoire n'étant pas débouchant latéralement. Lorsqu'ils ne forment par de rainure latérale, les orifices de mâchoires peuvent être des trous oblongs.

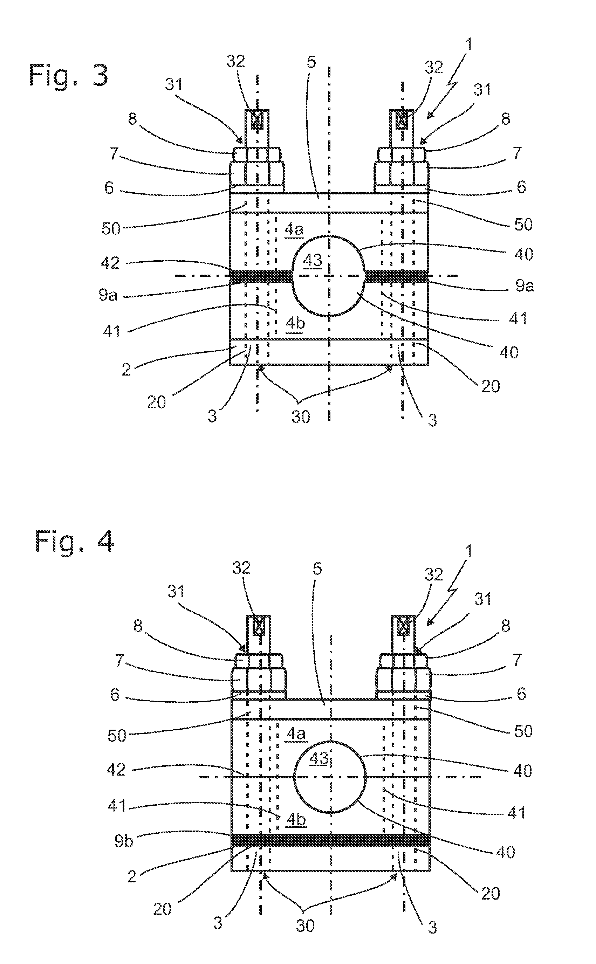

Les dispositifs de fixation réglable 1 des figures 3 et 4 sont sensiblement similaires à ceux des figures précédentes. Ils s'en différencient principalement par le fait qu'ils comportent chacun une cale 9a, b apte à être interposée entre deux autres pièces formant le dispositif de fixation réglable 1.

Dans le cas du dispositif de fixation réglable 1 de la figure 3, la cale 9a est prévue entre les première et seconde mâchoires 4a, 4b. Cette cale 9a se présente par exemple sous la forme de deux lames, par exemple pelables afin de régler leurs épaisseurs, prévues de part et d'autre du logement transversal 43. La cale 9a permet au logement transversal 43 d'accueillir une tuyauterie de diamètre supérieur au diamètre initial des évidements 40 ou une tuyauterie ayant une section déformée. Dans cette configuration, la tuyauterie est glissante. La cale 9a peut être prévue en matériau élastiquement déformable. Chaque lame de cale 9a est traversée par un orifice (non représenté) similaire aux orifices de mâchoires 41 et autorisant le passage de la tige de maintien 3.

Dans le cas du dispositif de fixation réglable 1 de la figure 4, la cale 9b est prévue entre la plaque de base 2 et la seconde mâchoire 4b. Cette cale 9b se présente sous la forme d'une pièce unique, par exemple pelable afin de régler son épaisseur. La cale 9b permet de rehausser l'axe du logement transversal 43 par rapport à la plaque de base 2 et ainsi compenser un défaut de hauteur de la tuyauterie. Selon une variante de réalisation non représentée, le dispositif de fixation réglable est prévu sans cale et un jeu est conservé entre les première et seconde mâchoires. La tuyauterie est alors bloquée entre les première et seconde mâchoires 4a, 4b. La cale 9b peut également être prévue en matériau élastiquement déformable.

Selon une variante de réalisation, les lames de la cale ont des épaisseurs différentes.

Selon une autre variante de réalisation non représentée, les première et seconde mâchoires ont des dimensions différentes. De même, chaque première et seconde mâchoires peut être formée par plusieurs pièces. Le dispositif de fixation réglable selon l'invention peut ainsi comporter trois mâchoires, une mâchoire inférieure, une mâchoire centrale et une mâchoire supérieure.

Selon une encore autre variante de réalisation non représentée, le dispositif de fixation réglable selon l'invention peut comporter plusieurs logements transversaux et/ou un nombre de tige de fixation supérieur.

### Possibilités d'application industrielle

Le dispositif de fixation réglable 1 selon l'invention peut être utilisé pour fixer des tuyauteries, en particulier des tuyauteries industrielles dans des milieux sensibles. Il est admis que l'orientation des tuyauteries est plus ou moins précise et par exemple variable à plus ou moins 3 degrés près. Le dispositif de fixation réglable 1 selon l'invention permet d'encaisser ces tolérances et les écarts de positionnement de la tuyauterie tout en garantissant un bon maintien des tuyauteries. Ce dispositif de fixation réglable 1 permet également de respecter des contraintes dimensionnelles strictes lui permettant d'être utilisé dans un encombrement restreint. Ce dispositif de fixation réglable 1 permet enfin de répondre à des exigences récentes, plus sévères, qui interdisent l'utilisation de l'aluminium, ce qui est notamment le cas pour les centrales nucléaires EDF.

Le dispositif de fixation réglable 1 selon l'invention peut bien entendu être utilisé dans tout autre type de bâtiment et d'installation. Il peut également être utilisé pour fixer des éléments autres que des tuyauteries.

Il est bien entendu que les exemples décrits ne sont que des illustrations particulières et en aucun cas limitatives des domaines d'application de l'invention. L'Homme de l'art pourra apporter des aménagements de taille, de forme et de matériau à l'exemple de réalisation particulier sans pour autant sortir du cadre de la présente invention, telle que définie par les revendications.

## Revendications

1. Dispositif de fixation réglable (1), notamment pour tuyauterie, comportant une plaque de base (2) définissant un plan de base transversal destiné à être plaqué contre un support, au moins deux tiges de maintien (3) s'étendant parallèlement entre-elles de ladite plaque de base (2), au moins une première et une seconde mâchoires (4a, 4b) définissant entre-elles au moins un logement (43) d'axe transversal apte à recevoir ladite tuyauterie, lesdites première et seconde mâchoires (4a, 4b) comportant chacune au moins deux orifices de mâchoires (41) sensiblement perpendiculaires audit axe transversal, traversant lesdites première et seconde mâchoires (4a, 4b) et destinés à être emmanchés sur lesdites tiges de maintien (3), lesdites première et seconde mâchoires (4a, 4b) étant maintenues en position sur lesdites tiges de maintien (3) par des moyens de blocage,
lesdits orifices (41) et lesdites tiges de maintien (3) étant dimensionnés de manière à ménager entre eux au moins un jeu transversal (J1) et un jeu latéral (J2)
**caractérisé en ce qu'**au moins deux desdits orifices de mâchoires (41) sont prolongés pour former une rainure ouverte sur le côté de ladite première, seconde mâchoire (4a, 4b) correspondante, et **en ce que** le jeu transversal et le jeu latéral autorisent, avant blocage desdites première et seconde mâchoires (4a, 4b), respectivement un débattement transversal d'au moins 1 mm et un débattement latéral d'au moins 3 mm entre lesdites première, seconde mâchoires (4a, 4b) et lesdites tiges de maintien (3), de sorte à autoriser un pivotement vertical dans ledit plan de base d'au moins 4 degrés desdites première, seconde mâchoires (4a, 4b) par rapport auxdites tiges de maintien (3).

2. Dispositif de fixation réglable (1) selon la revendication précédente, **caractérisé en ce que** lesdites rainures sont orientées latéralement.

3. Dispositif de fixation réglable (1) selon l'une quelconque des revendications précédentes, **caractérisé en ce que** lesdites première et seconde mâchoires (4a, 4b) comportent chacune au moins deux orifices de mâchoires (41) définissant chacun une rainure ouverte.

4. Dispositif de fixation réglable (1) selon l'une quelconque des revendications précédentes, **caractérisé en ce que** ladite plaque de base (2) comporte des orifices de plaque (20) taraudés, **en ce que** lesdites tiges de maintien (3) comportent chacune une première extrémité filetée (30) et **en ce que** ladite plaque de base (2) est couplée auxdites tiges de maintien (3) par le vissage desdites premières extrémités filetées (30) dans lesdits orifices de plaque (20) taraudés sans avoir recours à une soudure.

5. Dispositif de fixation réglable (1) selon l'une quelconque des revendications précédentes, **caractérisé en ce que** lesdites tiges de maintien (3) comportent chacune une seconde extrémité filetée (31) apte à recevoir au moins un écrou (7, 8) en appui sur ladite première mâchoire (4a) à l'opposé de ladite plaque de base (2).

6. Dispositif de fixation réglable (1) selon la revendication 5, **caractérisé en ce que** lesdits écrous (7, 8) sont en appui contre ladite première mâchoire (4a) par l'intermédiaire d'une plaque d'appui (5) comportant deux orifices d'appui (50) traversants prévus en regard desdites tiges de maintien (3).

7. Dispositif de fixation réglable (1) selon l'une quelconque des revendications précédentes, **caractérisé en ce qu'**il comporte au moins une cale (9a, 9b) apte à être interposée entre lesdites première et seconde mâchoires (4a, 4b) ou entre l'une desdites plaque de base (2), plaque d'appui (5) et l'une desdites première et seconde mâchoires (4a, 4b).

## Patentansprüche

1. Einstellbare Befestigungsvorrichtung (1), vor allem für Rohrleitungen, eine Grundplatte (2) umfassend, die eine querverlaufende Grundebene bildet, die dazu bestimmt ist, an eine Halterung angelegt zu werden, zumindest zwei Haltestangen (3), die sich parallel zueinander aus der besagten Grundplatte (2) erstrecken, zumindest eine erste und eine zweite Klaue (4a, 4b) die miteinander zumindest eine Aufnahme (43) mit quer verlaufender Achse bilden, die in der Lage ist, die besagten Rohrleitungen aufzunehmen, wobei die besagte erste und zweite Klaue (4a, 4b) jeweils zumindest zwei Klauenöffnungen (41) umfassen, die in etwa senkrecht zur besagten quer verlaufenden Achse verlaufen, und durch die besagte erste und zweite Klaue (4a, 4b) führen, und dazu bestimmt sind, auf die besagten beiden Haltestangen (3) aufgesetzt zu werden, wobei die besagte erste und zweite Klaue (4a, 4b) auf den besagten Haltestangen (3) durch Blockiermittel in Stellung gehalten werden, wobei die besagten Öffnungen (41) und die besagten Haltestangen (3) derart bemessen sind, um zwischen sich zumindest ein quer verlaufendes Spiel (J1) und ein seitliches Spiel (J2) vorzusehen,
**dadurch gekennzeichnet, dass** zumindest zwei der besagten Klauenöffnungen (41) verlängert sind, um eine offene Einkerbung an der Seite der besagten entsprechenden ersten und zweiten Klaue (4a, 4b) zu bilden, und dadurch, dass das quer verlaufende Spiel und das seitliche Spiel vor der Blockierung der besagten ersten und zweiten Klaue (4a, 4b) jeweils eine quer verlaufende Auslenkung um zumindest 1 mm und eine seitliche Auslenkung von zumindest 3 mm zwischen der besagten ersten und zweiten Klaue (4a, 4b) und den besagten Haltestangen (3) erlauben, sodass ein vertikaler Schwenk der besagten ersten und zweiten Klaue (4a, 4b) um zumindest 4 Grad in der besagten Grundebene im Verhältnis zu den besagten Haltestangen (3) erlaubt wird.

2. Einstellbare Befestigungsvorrichtung (1) nach dem vorherigen Anspruch, **dadurch gekennzeichnet, dass** die besagten Einkerbungen seitlich orientiert sind.

3. Einstellbare Befestigungsvorrichtung (1) nach irgendeinem der vorherigen Ansprüche, **dadurch gekennzeichnet, dass** die besagte erste und zweite Klaue (4a, 4b) jeweils zumindest zwei Klauenöffnungen (41) umfassen, die jeweils eine offene Einkerbung bilden.

4. Einstellbare Befestigungsvorrichtung (1) nach irgendeinem der vorherigen Ansprüche, **dadurch gekennzeichnet, dass** die erste Grundplatte (2) gewindegebohrte Plattenbohrungen (20) umfasst, dadurch, dass die besagten Haltestangen (3) jeweils ein erstes Ende mit Gewinde (30) umfassen, und dadurch, dass die besagte Grundplatte (2) durch Verschrauben der besagten ersten Enden mit Gewinde (30) in den besagten gewindegebohrten Plattenbohrungen (20) mit den besagten Haltestangen (3) verbunden wird, ohne auf eine Schweißung zurückzugreifen.

5. Einstellbare Befestigungsvorrichtung (1) nach irgendeinem der vorherigen Ansprüche, **dadurch gekennzeichnet, dass** die besagten Haltestangen (3) jeweils ein zweites Ende mit Gewinde (31) umfassen, das in der Lage ist, zumindest eine Mutter (7, 8) aufzunehmen, die auf der gegenüberliegenden Seite der besagten Grundplatte (2) an der besagten ersten Klaue (4a) anliegt.

6. Einstellbare Befestigungsvorrichtung (1) nach Anspruch 5, **dadurch gekennzeichnet, dass** die besagten Muttern (7, 8) über eine Auflageplatte (5) auf der besagten ersten Klaue (4a) anliegen, die zwei durchgehende Auflageöffnungen (50) umfasst, die gegenüber den besagten Haltestangen (3) vorgesehen sind.

7. Einstellbare Befestigungsvorrichtung (1) nach irgendeinem der vorherigen Ansprüche, **dadurch gekennzeichnet, dass** sie zumindest eine Abstimmplatte (9a, 9b) umfasst, die in der Lage ist, zwischen die besagte erste und zweite Klaue (4a, 4b), oder zwischen eine der besagten Grundplatte (2) und Auflageplatte (5) und eine der besagten ersten und zweiten Klaue (4a, 4b) eingelegt zu werden.

## Claims

1. Adjustable fastening device (1), in particular for a pipe, comprising a base plate (2) defining a transversal base plane intended to be thrust against a support, with at least two maintaining rods (3) extending in parallel between them from said base plate (2), at least one first and one second jaws (4a, 4b) defining between them at least one housing (43) with a transversal axis able to receive said pipe, said first and second jaws (4a, 4b) each comprising at least two jaw openings (41) substantially perpendicular to said transversal axis, passing through said first and second jaws (4a, 4b) and intended to be press fitted onto said maintaining rods (3), said first and second jaws (4a, 4b) being maintained in position on said maintaining rods (3) by a blocking unit, said openings (41) and said maintaining rods (3) being sized in such a way as to arrange between them at least one transversal clearance (J1) and one lateral clearance (J2)
**characterised in that** at least two of said jaw openings (41) are extended in order to form an open groove on the side of said corresponding first, second jaw (4a, 4b), and **in that** the transversal clearance and the lateral clearance authorise, before blocking said first and second jaws (4a, 4b), respectively a transversal gap of at least 1 mm and a lateral gap of at least 3 mm between said first, second jaws (4a, 4b) and said maintaining rods (3), in such a way as to authorise a vertical pivoting in said base plane of at least 4 degrees from said first, second jaws (4a, 4b) with respect to said maintaining rods (3).

2. Adjustable fastening device (1) as claimed in the preceding claim, **characterised in that** said grooves are oriented laterally.

3. Adjustable fastening device (1) as claimed in any preceding claim, **characterised in that** said first and second jaws (4a, 4b) each comprise at least two jaw openings (41) each defining an open groove.

4. Adjustable fastening device (1) as claimed in any preceding claim, **characterised in that** said base plate (2) comprises threaded plate openings (20), **in that** said maintaining rods (3) each comprise a first threaded end (30) and **in that** said base plate (2) is coupled to said maintaining rods (3) by the screwing of said first threaded ends (30) into said threaded plate openings (20) without having recourse to welding.

5. Adjustable fastening device (1) as claimed in any preceding claim, **characterised in that** said maintaining rods (3) each comprise a second threaded end (31) able to receive at least one nut (7, 8) bearing on said first jaw (4a) opposite said base plate (2).

6. Adjustable fastening device (1) according to claim 5, **characterised in that** said nuts (7, 8) are bearing on said first jaw (4a) by the intermediary of a bearing plate (5) comprising two bearing through-openings (50) provided facing said maintaining rods (3).

7. Adjustable fastening device (1) as claimed in any preceding claim, **characterised in that** it comprises at least one spacer (9a, 9b) able to be inserted between said first and second jaws (4a, 4b) or between one of said base plates (2), bearing plate (5) and one of said first and second jaws (4a, 4b).
